# EUROPÄISCHE PATENTSCHRIFT

(11) **EP 2 643 200 B1**
(45) Veröffentlichungstag und Bekanntmachung des Hinweises auf die Patenterteilung: **13.04.2016**
(21) Anmeldenummer: 11778805.9
(22) Anmeldetag: 29.10.2011
(51) Int. Cl.: B62D 21/15, F16F 7/12

(54) **CRASHSTRUKTUR FÜR EIN KRAFTFAHRZEUG**
CRASH STRUCTURE FOR A MOTOR VEHICLE
STRUCTURE D'AMORTISSEMENT DE CHOCS POUR UN VÉHICULE AUTOMOBILE

(30) Priorität: 22.11.2010 DE 102010052135
(43) Veröffentlichungstag der Anmeldung: 02.10.2013
(73) Patentinhaber: Audi AG, 85045 Ingolstadt (DE)
(72) Erfinder: WERUM, Daniel, 74172 Obereisesheim (DE); LOHMANN, Jan, 24558 Henstedt-Ulzburg (DE); FEINDLER, Nico, 70499 Stuttgart (DE)
(74) Vertreter: Patzelt, Heike Anna Maria
(86) Internationale Anmeldenummer: PCT/EP2011/005482
(87) Internationale Veröffentlichungsnummer: WO 2012/069130

(56) Entgegenhaltungen:
- DE-A1- 19 856 980
- DE-A1-102007 026 680
- US-A- 4 545 172

## Beschreibung

Die Erfindung betrifft eine Crashstruktur für ein Kraftfahrzeug gemäß dem Oberbegriff des Patentanspruchs 1.

Gattungsgemäße Crashstrukturen für Kraftfahrzeuge sind in zahlreichen Variationen bekannt. Diese Crashstrukturen werden zur Erhöhung der Sicherheit in vielfältigen Bauformen und an verschiedenen Stellen in Kraftfahrzeugen eingesetzt. Insbesondere werden primär Crashelemente aus kohlenstofffaserverstärkten Kunststoffen und aus Faserkunststoffverbunden eingesetzt, welche auf Grund einer möglichen Gewichtseinsparung und einer sehr hohen gewichtsspezifischen Energieaufnahme hervorragend zur Aufnahme von Crashenergie in Kraftfahrzeugen geeignet sind. Im Rennsport werden beispielsweise sogenannte Crashkoni verwendet. Andere Möglichkeiten sind beispielsweise CFK-Crashrohre oder CFK-Crashwellen. Im Falle eines Fahrzeugaufpralls wird die unfallbedingte Aufprallenergie in Verformungsenergie umgewandelt. Dies erfolgt dadurch, dass die Crashstruktur einen bestimmten Bauraum aufweist, sich im Crashfall unter Absorption der Aufprallenergie zumindest bereichsweise verformt und dann die verbliebene Aufprallenergie an eine Karosserie eines Fahrzeugs weiterleitet. Besonders bewährt haben sich diese Crashstrukturen im Front- und/oder Heckbereich von Kraftfahrzeugen.

Aus der DE 10 2007 026 680 A1 ist eine gattungsgemäße Crashstruktur für ein Kraftfahrzeug mit einem Crashelement bekannt, das aus einem faserverstärkten Kunststoff besteht und teilweise mit Faserverbundwerkstoff verstärkt ist. Die vorwiegend einteilige Crashstruktur ist mit einer nach unten offenen in Fahrzeuglängsrichtung verlaufenden Profilstruktur ausgebildet. An ihren beiden entgegengesetzten Enden umfasst die Crashstruktur in Fahrzeugquerrichtung jeweils eine zumindest ein Stützelement aufweisende Abstützeinheit, wobei sich ein Endbereich des Crashelements mindestens über das zumindest eine in Fahrzeugquerrichtung verlaufende Stützelement der Abstützeinheit an einer Tragstruktur des Kraftfahrzeugs abstützt. Die Abstützeinheit weist einen C-förmigen Querschnitt auf, in dessen nach vorne hin offenen Bereich die freien hinteren Enden der Profilstrukturen eingepasst sind. Die C-förmige Abstützeinheit umgreift somit die freien hinteren Enden der Profilstrukturen und klemmt sie ein.

Aus der DE 10 2005 004 780 B3 ist eine Crashstruktur für ein Kraftfahrzeug mit einem Crashelement aus faserverstärktem Kunststoff bekannt. Das Crashelement ist als dreieckförmiger zusammenhängender Bauteilverbund ausgeführt, indem das Crashelement ein quer zur Fahrzeuglängsrichtung verlaufendes Abstützelement aufweist, an dessen äußeren Enden zwei weitere Stützelemente in Fahrzeuglängsrichtung angebunden sind, die an ihren entgegengesetzten Enden v-förmig zusammenlaufen und über eine querverlaufende Platte miteinander verbunden sind. In den Stützelementen verlaufen als Versteifungselemente Stegwände, die in den Stützelementen längliche Kammern ausbilden.

Aus der DE 198 56 980 A1 ist ein Fahrzeug mit einem Stoßfänger bekannt. Bei dem beschriebenen Fahrzeug ist oberhalb des Stoßfängers eine energieaufnehmende Einrichtung vorgesehen, durch die bei einem Fahrzeugaufprall zusätzlich eine Krafteinleitung in einer horizontalen Ebene etwa durch den Massenschwerpunkt des Aufbaus erfolgt. Die energieaufnehmende Einrichtung setzt sich.aus einer Oberschale und einer Unterschale mit jeweils aufeinander zuweisenden rinnenförmigen Vertiefungen zusammen. Die beiden Schalen sind an den abgeflachten Endabschnitten der Vertiefungen durch Punktschweißen, Nieten, Stanznieten, Kleben usw. verbunden, so dass langgetreckte Hohlkammern mit einem sechseckförmigen Querschnitt entstehen. Außenseitig ist die Einrichtung durch Abschlussbleche eingefasst, die zusätzlich der Anbindung der Verbindungselemente dienen.

In der US 4,545,172 werden verschiedene energieabsorbierende Strukturen für Kraftfahrzeuge beschrieben.

Die Aufgabe der Erfindung ist es, eine Crashstruktur für ein Kraftfahrzeug zu schaffen, die bei einfacher und kostengünstiger Konstruktion sowie einer steifen Anbindung an eine Tragstruktur des Kraftfahrzeugs eine ausreichende Absorption von Aufprallenergie im Falle eines Fahrzeugaufpralls ermöglicht.

Erfindungsgemäß wird die Aufgabe durch Bereitstellung einer Crashstruktur für ein Kraftfahrzeug mit den Merkmalen des Patentanspruchs 1 gelöst. Vorteilhafte Ausführungsformen und Weiterbildungen der Erfindung sind in den abhängigen Ansprüchen angegeben.

Um eine Crashstruktur für ein Kraftfahrzeug zu schaffen, die bei einfacher und kostengünstiger Konstruktion sowie einer steifen Anbindung an eine Tragstruktur des Kraftfahrzeugs eine ausreichende Absorption von Aufprallenergie im Falle eines Fahrzeugaufpralls ermöglicht, wird erfindungsgemäß vorgeschlagen, dass das Crashelement aus einem wellenförmigen Bauteil mit in Fahrzeuglängsrichtung verlaufenden Wellen besteht, dessen Endbereich sich mindestens über das zumindest eine in Fahrzeugquerrichtung verlaufende Stützelement der Abstützeinheit an der Tragstruktur des Kraftfahrzeugs abstützt. Als Crashstruktur wird im Sinne dieser Erfindung ein Bauteil bezeichnet, das vorzugsweise lösbar an einer Karosserie eines Kraftfahrzeugs befestigt ist und die Karosserie insbesondere hinsichtlich einer Aufnahme von auf die Karosserie des Kraftfahrzeugs wirkender Kräfte unterstützen kann. Als Tragstruktur wird im Sinne dieser Erfindung die Karosserie eines Kraftfahrzeugs mit den damit verbundenen zumindest teilweise die Steifigkeit der Karosserie unterstützenden Strukturbauteilen verstanden. Ein wesentlicher Vorteil der Erfindung besteht, darin, dass eine sichere Anbindung einer mindestens teilweise aus einem Faserverbundwerkstoff bestehenden Crashstruktur an die Tragstruktur der Fahrzeugkarosserie bzw. eine einfache Einbindung der Crashstruktur in die Fahrzeugkarosserie gewährleistet ist. Da ein Schweißen der Crashstruktur nicht möglich ist, stehen als Verbindungstechniken andere einfache, vorzugsweise großflächige und somit zuverlässige Verbindungstechniken zur Verfügung, zum Beispiel Schraub-, Kleb- oder Nietverbindungen beziehungsweise eine Kombination aus verschiedenen Verbindungstechniken. Die erfindungsgemäße sichere Anbindung der Crashstruktur an die Tragstruktur der Fahrzeugkarosserie widersteht auch Belastungen, die nicht ideal senkrecht auf die Crashstruktur wirken, und zu Momenten und Kräften führen. Diese muss die Anbindung der Crashstruktur in die Tragstruktur der Fahrzeugkarosserie sicher abfangen. Dies ist erforderlich, um die Funktion der Crashstruktur zu gewährleisten bzw. ein Wegknicken der wellenförmigen Crashstruktur zu verhindern. Zusätzlich ist durch die erfindungsgemäße Ausgestaltung eine Erhöhung der Steifigkeit der Crashstruktur und eines Schutzes der Karosserie des Kraftfahrzeugs realisierbar. Es kann eine gesteuerte Einleitung von Kräften in die Crashstruktur und eine gezielte Verteilung der auftretenden Aufprallenergie in das Kraftfahrzeug erfolgen. Über das Crashelement können in baulich einfacher und kostengünstiger Weise Kräfte an die Karosserie des Kraftfahrzeugs weitergeleitet werden. Das erfindungsgemäße Crashelement verbessert die Steifigkeit der Karosserie des Kraftfahrzeugs, insbesondere im Front- und Heckbereich der Tragstruktur des Fahrzeugs. Das erfindungsgemäße wellenförmige Crashelement kann sehr leicht, aber dennoch verwindungssteif ausgeführt werden und deshalb trotz Leichtbauweise einen großen Teil von eventuell am Fahrzeug angreifenden Kräften in die Tragstruktur des Kraftfahrzeugs einleiten. Indem das Crashelement erfindungsgemäß zu der Steifigkeit der Tragstruktur des Kraftfahrzeugs beiträgt, können die Anforderungen an die Steifigkeit der übrigen Strukturbauteile verringert werden. In vorteilhafter Weise weist die erfindungsgemäße Crashstruktur bei dieser Ausführungsform neben dem geringen Gewicht und der hohen Steifigkeit den Vorteil einer hohen spezifischen Energieaufnahmefähigkeit auf. Auch bei einem Schrägaufprall weist das Bauteil eine hohe Stabilität sowie ein sehr gutes Aufprallverhalten auf. Auf Grund der Orientierung des wellenförmigen Bauteils wird die auf die Crashstruktur wirkende Aufprallenergie optimal absorbiert und insbesondere die Energieaufnahme bei schrägem Aufprall wesentlich verbessert. Ferner beschränkt sich die Montage des Crashelements lediglich darauf ein Stützelement der Abstützeinheit des Crashelements an die Tragstruktur des Kraftfahrzeugs anzubinden und spart somit besonders kostenintensiven Arbeits- und Materialaufwand. In vorteilhafter Weise kann hierdurch ein extrem leichtes Bauteil entstehen, das somit ganz im Sinne eines Leichtbaugedankens konzipierbar ist. Zudem kann dadurch auch das Gesamtgewicht der Karosserie verringert werden, wodurch der Energiebedarf zum Betreiben des Fahrzeugs sinkt.

Erfindungsgemäß ist das zumindest eine Stützelement der Abstützeinheit an die Wellengeometrie des Crashelements angepasst und liegt flächig am Endbereich des wellenförmigen Crashelements an. In vorteilhafter Weise wird hierdurch das Stützelement der Abstützeinheit formschlüssig an die Wellengeometrie des Crashelements angepasst und erhöht auf diese Weise die Stabilität der Crashstruktur. Somit kann der durch die unfallbedingte Aufprallenergie erzeugte Kraftfluss optimal aufgenommen und an die Tragstruktur des Kraftfahrzeugs weitergeleitet werden. Insbesondere können die Strukturbauteile, an denen das Crashelement der Crashstruktur befestigt wird, mit einer geringeren Materialstärke tigt werden. Auf diese Weise werden sowohl die Materialkosten als auch die Herstellungskosten der Fahrzeugkarosserie verringert.

In weiterer vorteilhafter Ausgestaltung der erfindungsgemäßen Crashstruktur ist an die Wellengeometrie des zumindest einen Stützelements ein Befestigungsflansch zur Anbindung an die Tragstruktur des Kraftfahrzeugs angeformt. In vorteilhafter Weise ergeben sich hierdurch auf einfache Weise eine stabile und belastbare Anbindung des Crashelements an die Tragstruktur des Kraftfahrzeugs und damit ein stabiler Lastpfad zur Übertragung eines Kraftflusses an die Tragstruktur des Kraftfahrzeugs mit ausreichender Abstützung der auftretenden Kräfte und Momente. Zudem ist hierdurch eine Erhöhung der Steifigkeit der Crashstruktur und damit der Fahrzeugkarosserie realisierbar, über welche eine verbesserte Einleitung von Aufprallenergie in die Crashstruktur und eine gleichmäßigere Verteilung dieser Aufprallenergie in die Crashstruktur erfolgen kann. Die Crashstruktur weist über den erfindungsgemäßen Befestigungsflansch zur Anbindung an die Tragstruktur des Kraftfahrzeugs eine hohe Steifigkeit auf, wodurch sich in vorteilhafter Weise eine Erhöhung der Stabilität der Karosserie ergibt. Über das Crashelement können in baulich einfacher und kostengünstiger Weise Kräfte an die Karosserie weitergeleitet werden. Der erfindungsgemäße Befestigungsflansch zur Anbindung an die Tragstruktur des Kraftfahrzeugs verbessert somit zusätzlich die Steifigkeit der Karosserie des Kraftfahrzeugs.

Besonders vorteilhaft ist, dass an das Crashelement ein Anschlussflansch zur Anbindung an die Tragstruktur des Kraftfahrzeugs angeformt ist. In vorteilhafter Weise ergibt sich hierdurch auf einfache Weise eine weitere Erhöhung der Stabilität und der Belastbarkeit der Anbindung des Crashelements an die Tragstruktur des Kraftfahrzeugs und damit ein weiterer stabiler Lastpfad zur Übertragung eines Kraftflusses an die Tragstruktur des Kraftfahrzeugs, indem auch Momente und Kräfte, die nicht nur aus einer Richtung auf das Crashelement einwirken, aufgenommen werden können. Hierdurch wird erreicht, dass das einteilige Crashelement ohne zusätzliche Anbindungsteile bei einem Aufprall nicht absorbierte Aufprallenergie und/oder im Fahrbetrieb in die Fahrzeugkarosserie eingeleitete Kräfte und Schwingungen direkt aufnimmt und/oder besser in die Fahrzeugkarosserie weiterleitet und verteilt. In vorteilhafter Weise wird durch die erfindungsgemäße Anordnung des Anschlussflansches zur Anbindung an die Tragstruktur eine Verbesserung der Krafteinleitung in den Rohbau erzielt.

In Ausgestaltung der erfindungsgemäßen Crashstruktur weist die Abstützeinheit zwei Stützelemente auf, welche das Crashelement zumindest teilweise umgeben. Indem an der Crashstruktur ein dem ersten formschlüssigen Stützelement gegenüberliegendes zweites formschlüssiges Stützelement vorgesehen ist, weist die Crashstruktur eine weitere Erhöhung der Verwindungssteifigkeit auf. Hierdurch lässt sich eine noch bessere Aufnahme der unfallbedingt in die Fahrzeugkarosserie eingeleiteten Aufprallenergie erzielen. Über das zweite Stützelement kann ein zusätzlicher Kraftpfad bereitgestellt werden, über welchen in die Tragstruktur eingeleitete Aufprallenergie von der Crashstruktur des Kraftfahrzeugs abgefangen werden kann. Insbesondere kann die Materialstärke des Crashelements in optimaler Weise an die Kraftverläufe innerhalb der Crashstruktur angepasst werden. In vorteilhafter Weise ergibt sich durch die beiden Stützelemente eine Materialanhäufung in den kraftbeanspruchten Bereichen der Crashstruktur, um etwa ein Ausknicken bei Auftreten der Aufprallenergie des erfindungsgemäßen Crashelements zu verhindern.

Des Weiteren wird vorgeschlagen, dass der Endbereich des wellenförmigen Bauteils abgeschrägt ausgeführt ist. In vorteilhafter Weise wird hierdurch gezielt der Kraftverlauf der unfallbedingt entstehenden Aufprallenergie an die Tragstruktur des Kraftfahrzeugs weitergeleitet, so dass der Kraftverlauf im Endbereich des wellenförmigen Bauteils eine gesteuerte spannungsfreie Umlenkung aufweist.

Ferner wird vorgeschlagen, dass das zumindest eine in Fahrzeugquerrichtung verlaufende Stützelement der Abstützeinheit an das Crashelement angeformt ist. In vorteilhafter Weise ergeben sich hierdurch eine stabile und belastbare Anbindung des erfindungsgemäßen Crashelements an die Tragstruktur des Kraftfahrzeugs und damit ein sicherer Lastpfad zur Übertragung des Kraftflusses an die Tragstruktur des Kraftfahrzeugs. In vorteilhafter Weise ist hierdurch eine konstruktiv einfache Verbesserung der Steifigkeit des Crashelements und damit der Fahrzeugkarosserie realisierbar, über welche eine verbesserte Einleitung von Aufprallenergie in das Crashelement und eine gleichmäßigere Verteilung dieser Aufprallenergie erfolgen kann. Das Crashelement weist über das erfindungsgemäße Stützelement der Abstützeinheit zur Anbindung an die Tragstruktur des Kraftfahrzeugs eine hohe Steifigkeit auf, wodurch sich in vorteilhafter Weise eine Erhöhung der Stabilität der Fahrzeugkarosserie ergibt. Über das Crashelement können in baulich einfacher und kostengünstiger Weise Kräfte an die Karosserie weitergeleitet werden. Das erfindungsgemäße Stützelement der Abstützeinheit zur Anbindung an die Tragstruktur des Kraftfahrzeugs erhöht somit insgesamt die Steifigkeit der Karosserie des Kraftfahrzeugs.

Eine bevorzugte Realisierung der erfindungsgemäßen Crashstruktur sieht vor, dass eine Kante des wellenförmigen Bauteils abgeschrägt ist. In vorteilhafter Weise wird hierdurch gezielt der Kraftverlauf der unfallbedingt entstehenden Aufprallenergie an die Tragstruktur des Kraftfahrzeugs umgelenkt, so dass in den Kanten des wellenförmigen Bauteils Spannungsspitzen reduziert werden.

In einer Ausgestaltung der erfindungsgemäßen Crashstruktur ist an einer der abgeschrägten Kante gegenüberliegenden Seite des Crashelements das zumindest eine Stützelement angeordnet, an welches der Befestigungsflansch zur Anbindung an die Tragstruktur des Kraftfahrzeugs angeformt ist. In vorteilhafter Weise ergibt sich hierdurch im gesamten Endbereich des Crashelements eine hohe Steifigkeit und Stabilität, die das Crashelement gegen Ausknicken optimal schützt und damit ein Lastpfad zur Übertragung des Kraftflusses an die Tragstruktur des Kraftfahrzeugs sicherstellt. Das hat den Vorteil, dass das Crashelement die unfallbedingte Aufprallenergie optimal aufnehmen und an die Tragstruktur des Kraftfahrzeugs weitergeleiten kann. In vorteilhafter Weise ist hierdurch eine konstruktiv einfache Erhöhung der Steifigkeit eines Crashelements und damit der Karosserie des Kraftfahrzeugs realisierbar, über welches eine gleichmäßigere Verteilung der Aufprallenergie in das Crashelement erfolgen kann.

In einer weiteren Ausgestaltung der erfindungsgemäßen Crashstruktur umgreifen ein Befestigungsflansch eines Stützelements und ein Anschlussflansch des Crashelements oder zwei Befestigungsflansche von zwei Stützelementen einen Querträger der Tragstruktur des Kraftfahrzeugs mindestens teilweise. Die beidseitige Anbindung des Crashelements an den Querträger der Tragstruktur des Kraftfahrzeugs über einen Befestigungsflansch eines Stützelements und einen Anschlussflansch des Crashelements oder über zwei Befestigungsflansche von zwei Stützelementen gibt der Crashstruktur eine besonders gute Steifigkeit und dadurch eine besonders stabile Anbindung an die Tragstruktur des Kraftfahrzeugs. Die bei einem Aufprall auftretende Aufprallenergie kann über die beidseitig verlaufenden Flansche an den Querträger der Tragstruktur des Kraftfahrzeugs geleitet und somit aufgeteilt werden. In vorteilhafter Weise wird dadurch eine weitere Verbesserung der Krafteinleitung in die Tragstruktur des Kraftfahrzeugs erreicht.

Vorteilhafte Ausführungsformen der Erfindung sind in der Zeichnung dargestellt und werden nachfolgend beschrieben.

Dabei zeigen:
- Fig. 1: eine perspektivische Darstellung eines ersten Ausführungsbeispiels einer erfindungsgemäßen Crashstruktur für ein Kraftfahrzeug mit einem wellenförmigen Crashelement und einer ein Stützelement aufweisenden Abstützeinheit, die auf einem Querträger aufliegend mit der Tragstruktur des Kraftfahrzeugs verbunden ist,
- Fig. 2: eine perspektivische Darstellung eines zweiten Ausführungsbeispiels einer erfindungsgemäßen Crashstruktur für ein Kraftfahrzeug mit einem wellenförmigen Crashelement und einer zwei Stützelemente aufweisenden Abstützeinheit, welche einen Querträger einer Tragstruktur des Kraftfahrzeugs teilweise umgreifen,
- Fig. 3: eine Explosionsdarstellung der Crashstruktur aus Fig. 2 mit den beiden Stützelementen der Abstützeinheit, zwischen denen das wellenförmige Crashelement teilweise aufnehmbar ist,
- Fig. 4: eine detaillierte Seitenansicht der Crashstruktur aus Fig. 2 und Fig. 3 in einer Explosionsdarstellung,
- Fig. 5: einen Längsschnitt durch die Crashstruktur aus Fig. 2 bis 4 im Bereich eines Wellenberges,
- Fig. 6: eine perspektivische Darstellung eines dritten Ausführungsbeispiels einer erfindungsgemäßen Crashstruktur mit einem wellenförmigen Crashelement, an welches ein Anschlussflansch angeformt ist, und einer ein Stützelement aufweisenden Abstützeinheit, an welches ein Befestigungsflansch angeformt ist, wobei die Flansche zur Anbindung an eine Tragstruktur eines Kraftfahrzeugs dienen,
- Fig. 7: eine perspektivische Darstellung eines vierten Ausführungsbeispiels einer erfindungsgemäßen Crashstruktur mit einem wellenförmigen Crashelement, dessen eine Kante abgeschrägt ist, und einer ein Stützelement aufweisenden Abstützeinheit, an das ein Befestigungsflansch angeformt ist,
- Fig. 8: eine perspektivische Darstellung eines fünften Ausführungsbeispiels einer erfindungsgemäßen Crashstruktur mit einem in einem Endbereich abgeschrägten wellenförmigen Crashelement und mit einem in Fahrzeugquerrichtung verlaufenden Stützelement der Abstützeinheit, das an das Crashelement angeformt ist,
- Fig. 9: eine perspektivische Darstellung eines sechsten Ausführungsbeispiels einer erfindungsgemäßen Crashstruktur mit einem wellenförmigen Crashelement und einem Stützelement einer Abstützeinheit, wobei ein Befestigungsflansch des Stützelements und ein Anschlussflansch des Crashelements einen Querträger der Tragstruktur des Kraftfahrzeugs umgreifen,
- Fig. 10: eine perspektivische Darstellung der Crashstruktur aus Fig. 9 in einer Rückansicht,
- Fig. 11: eine perspektivische Darstellung der Crashstruktur aus Fig. 9 in einer Seitenansicht.

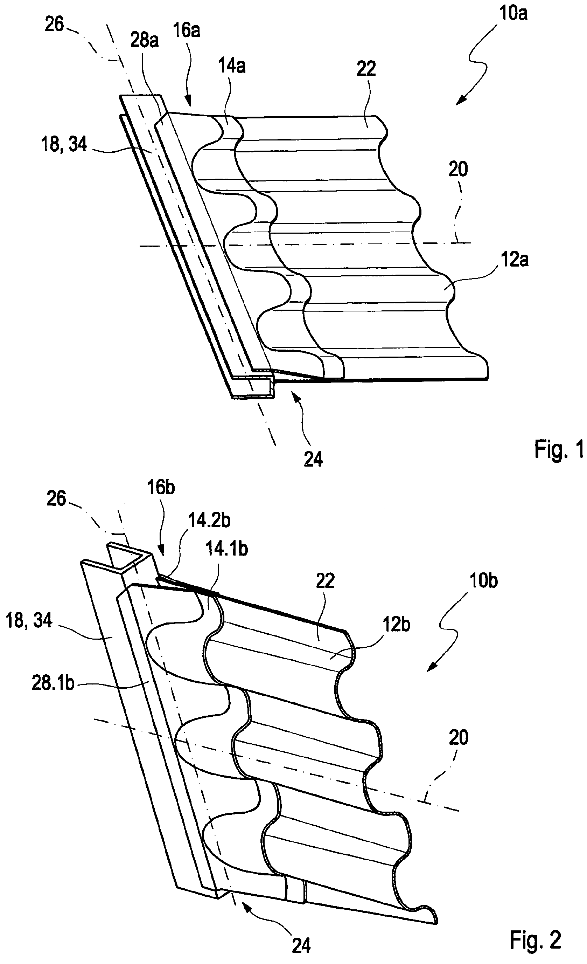

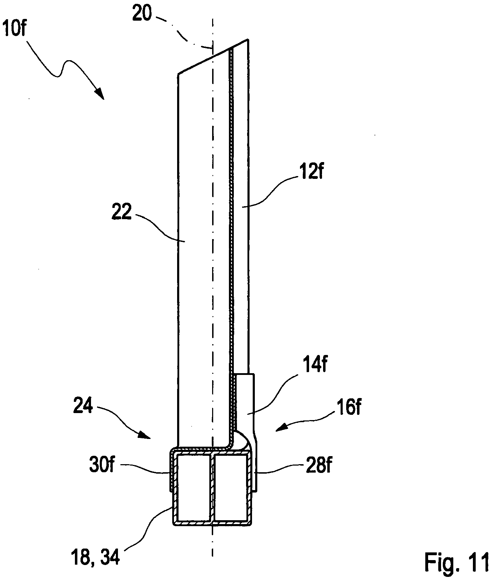

Wie aus Fig. 1 bis 11 ersichtlich ist, weist eine Crashstruktur 10a, 10b, 10c, 10d, 10e, 10f für ein Kraftfahrzeug ein Crashelement 12a, 12b, 12c, 12d, 12e, 12f aus einem Faserverbundwerkstoff und eine zumindest ein Stützelement 14a, 14.1b, 14.2b, 14c, 14d, 14e, 14f aufweisende Abstützeinheit 16a, 16b, 16c, 16d, 16e, 16f auf, die mit einer Tragstruktur 18 des Kraftfahrzeugs verbindbar ist.

Um eine Crashstruktur 10a, 10b, 10c, 10d, 10e, 10f für ein Kraftfahrzeug zu schaffen, die bei einfacher und kostengünstiger Konstruktion sowie einer steifen Anbindung an eine Tragstruktur 18 des Kraftfahrzeugs eine ausreichende Absorption von Aufprallenergie im Falle eines Fahrzeugaufpralls ermöglicht, wird erfindungsgemäß vorgeschlagen, dass das Crashelement 12a, 12b, 12c, 12d, 12e, 12f aus einem wellenförmigen Bauteil mit in Fahrzeuglängsrichtung 20 verlaufenden Wellen 22 besteht, dessen Endbereich 24 sich mindestens über das zumindest eine in Fahrzeugquerrichtung 26 verlaufende Stützelement 14a, 14.1b, 14.2b, 14c, 14d, 14e, 14f der Abstützeinheit 16a, 16b, 16c, 16d, 16e, 16f an der Tragstruktur 18 des Kraftfahrzeugs abstützt.

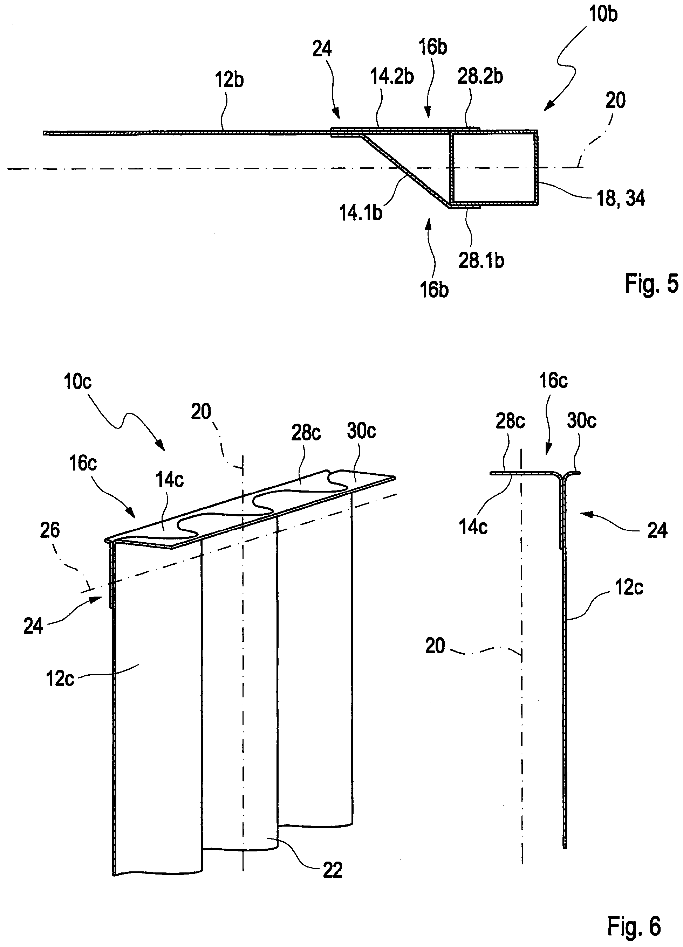

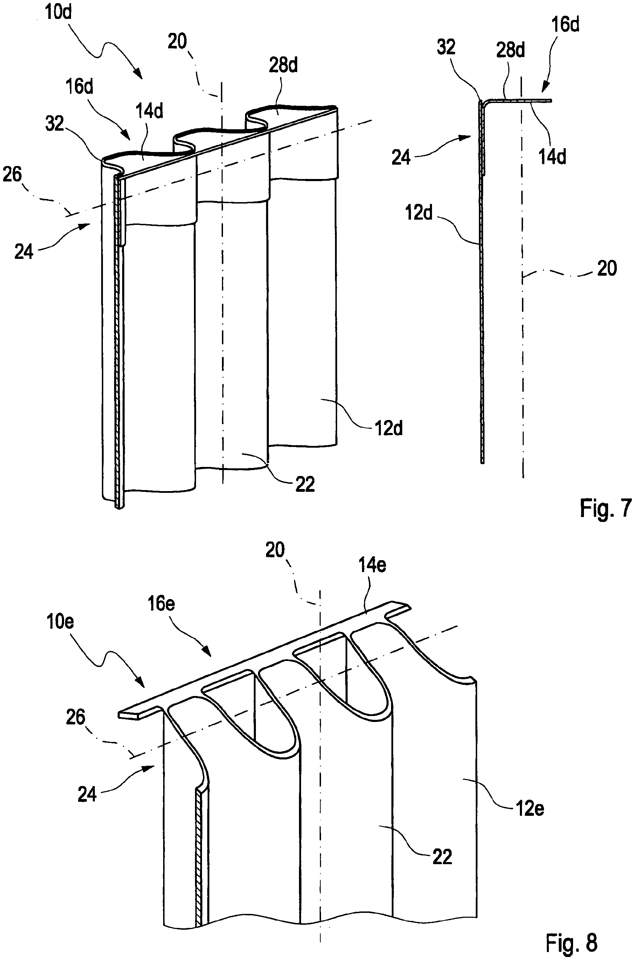

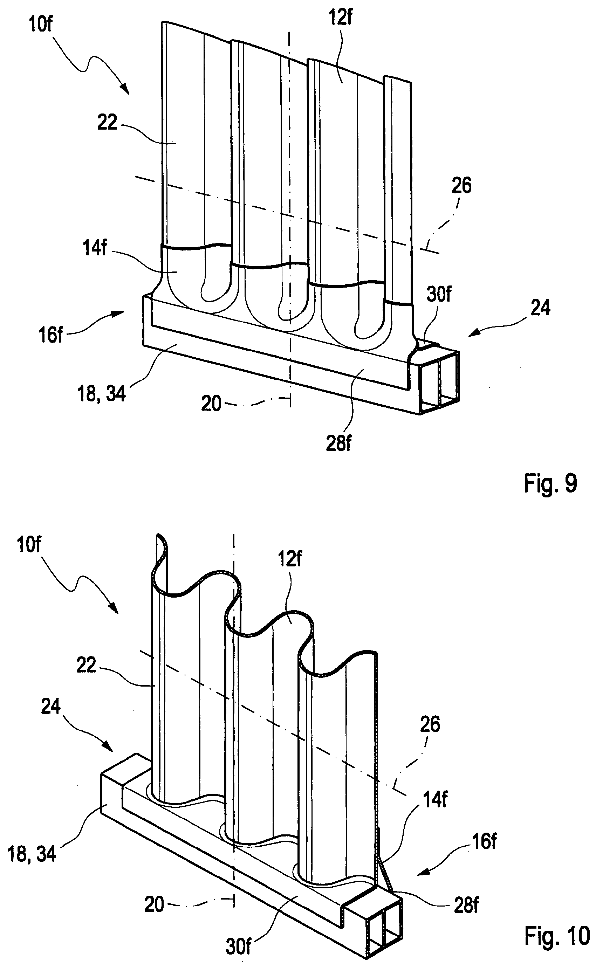

Fig. 1 bis 11 zeigen sechs Ausführungsbeispiele der Crashstruktur 10a, 10b, 10c, 10d, 10e, 10f für ein Kraftfahrzeug, wobei Fig. 1 ein erstes Ausführungsbeispiel, Fig. 2 bis Fig. 5 ein zweites Ausführungsbeispiel, Fig. 6 ein drittes Ausführungsbeispiel, Fig. 7 ein viertes Ausführungsbeispiel, Fig. 8 ein fünftes Ausführungsbeispiel und Fig. 9 bis Fig. 11 ein sechstes Ausführungsbeispiel zeigen.

Fig. 1 und 6 bis 11 zeigen in dem ersten, dritten, vierten, fünften und sechsten Ausführungsbeispiel eine Crashstruktur 10a, 10c, 10d, 10e, 10f für ein Kraftfahrzeug mit einem Crashelement 12a, 12c, 12d, 12e, 12f und einer ein Stützelement 14a, 14c, 14d, 14e, 14f aufweisenden Abstützeinheit 16a, 16c, 16d, 16e, und 16f, die mit einer Tragstruktur 18 des Kraftfahrzeugs verbindbar ist. Fig. 2 bis 5 zeigen im zweiten Ausführungsbeispiel eine Crashstruktur 10b für ein Kraftfahrzeug mit einem Crashelement 12b und einer zwei Stützelemente 14.1b, 14.2b aufweisende Abstützeinheit 16b, die mit einer Tragstruktur 18 des Kraftfahrzeugs verbindbar sind.

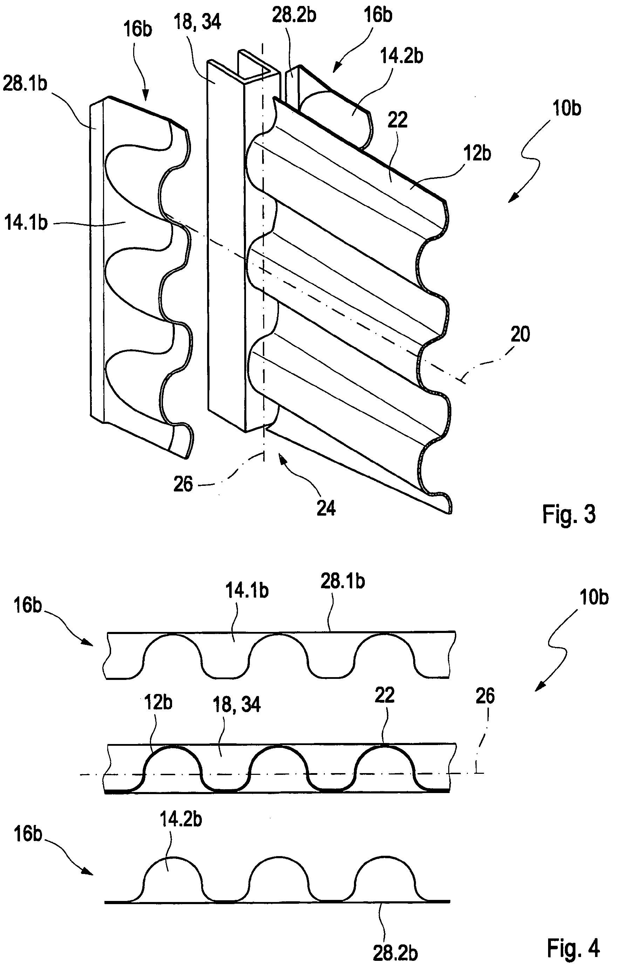

In den Ausführungsbeispielen gemäß Fig. 1 bis 7 und Fig. 9 bis 11 ist das zumindest eine Stützelement 14a, 14.1b, 14.2b, 14c, 14d, 14f der Abstützeinheit 16a, 16b, 16c, 16d, 16f an die Wellengeometrie des Crashelements 12a, 12b, 12c, 12d, 12f angepasst. Dabei liegt das zumindest eine Stützelement 14a, 14.1b, 14.2b, 14c, 14d, 14f der Abstützeinheit 16a, 16b, 16c, 16d, 16f im Endbereich 24 flächig am wellenförmigen Crashelement 12a, 12b, 12c, 12d, 12f an. In Fig. 1 bis 5 ragt das zumindest eine Stützelement 14a, 14.1b, 14.2b, 14f der Abstützeinheit 16a, 16b, 16f im Endbereich 24 über die Crashstruktur 10a, 10b, 10f des Crashelements 12a, 12b, 12f hinaus und überdeckt zumindest teilweise die Tragstruktur 18 des Kraftfahrzeugs. In Fig. 6 und 7 schließt das zumindest eine Stützelement 14c, 14d der Abstützeinheit 16c, 16d im Endbereich 24 bündig mit der Crashstruktur 10c, 10d des Crashelements 12c, 12d ab. In Fig. 4 ist das zweite Ausführungsbeispiel in einer Explosionsdarstellung der Crashstruktur 10b dargestellt und zeigt die beiden Stützelemente 14.1b und 14.2b der Abstützeinheit 16b, zwischen denen das wellenförmige Crashelement 12b teilweise aufnehmbar ist. Die Stirnseite des Crashelements 12b schließt an die Tragstruktur 18 des Kraftfahrzeugs bündig an. Fig. 5 zeigt in einem Längsschnitt durch die Crashstruktur 10b aus Fig. 2 bis 4 im Bereich eines Wellenberges die flächige Anbindung des wellenförmigen Crashelements 12b an die Abstützeinheit 16b, die eine Anbindung der Crashelements 12b der Crashstruktur 10b an die Tragstruktur 18 des Kraftfahrzeugs ermöglicht.

In den Ausführungsbeispielen gemäß Fig.1 bis 7 und Fig. 9 bis 11 ist an die Wellengeometrie des zumindest einen Stützelements 14a, 14.1 b, 14.2b, 14c, 14d, 14f ein Befestigungsflansch 28a, 28.1b, 28.2b, 28c, 28d, 28f zur Anbindung an die Tragstruktur 18 des Kraftfahrzeugs angeformt. Über den Befestigungsflansch 28a, 28.1b, 28.2b, 28c, 28d, 28f erfolgt die Anbindung des Crashelements 12a, 12b, 12c, 12d, 12f an die Tragstruktur 18 des Kraftfahrzeugs. In den Ausführungsbeispielen gemäß Fig. 2 bis 7 und Fig. 9 bis 11 ist der erfindungsgemäße Befestigungsflansch 28.1b, 28.2b, 28c, 28d, 28f senkrecht zum wellenförmigen Crashelement 12b, 12c, 12d, 12f und parallel zur Tragstruktur 18 des Kraftfahrzeugs angeordnet. Im ersten Ausführungsbeispiel gemäß Fig.1 ist der erfindungsgemäße Befestigungsflansch 28a parallel zum wellenförmigen Crashelement 12a. Hierbei wird die Anbindung des Befestigungsflanschs 28a an die Tragstruktur 18 des Kraftfahrzeugs auf einem Querträger 34 der Tragstruktur 18 aufliegend vorgenommen, während in den Ausführungsbeispielen gemäß Fig. 2 bis 5 und Fig. 9 bis 11 die Anbindung des Befestigungsflanschs 28.1b, 28f an die Tragstruktur 18 des Kraftfahrzeugs derart vorgenommen wird, dass der Querträger 34 von der Abstützeinheit 16b, 16f mindestens teilweise umgriffen wird. Im dritten und vierten Ausführungsbeispiel der Crashstruktur 10c, 10d gemäß Fig. 6 und 7 ist der Befestigungsflansch 28c, 28d baugleich ausgebildet und wird bündig zur Stirnseite des Crashelements 12c, 12d montiert, wobei die wellenförmige Hohlraumstruktur an der Stirnseite des Crashelements 12c, 12d durch den Befestigungsflansch 28c, 28d flächig nach außen verschlossen wird.

In den Ausführungsbeispielen gemäß Fig. 6 und Fig. 9 bis 11 ist an das Crashelement 12c, 12f ein Anschlussflansch 30c, 30f zur Anbindung an die Tragstruktur 18 des Kraftfahrzeugs angeformt. Zur weiteren Steigerung der Stabilität und der Verwindungssteifigkeit der Crashstruktur 10c, 10f und, um die Stückzahl der Bauteile niedrig zu halten, ist an das wellenförmige Crashelement 12c, 12f der erfindungsgemäßen Crashstruktur 10c, 10f der Anschlussflansch 30c, 30f einstückig angeformt. Wie in dem dritten Ausführungsbeispiel gemäß Fig. 6 ersichtlich ist, verschließt der Anschlussflansch 30c die offene Hohlraumstruktur an der Stirnseite der Crashstruktur 10c des Crashelements 12c und vergrößert damit die Anbindungsfläche an die Tragstruktur 18 des Kraftfahrzeugs und die Formstabilität im Endbereich 24 der Crashstruktur 10c. Im sechsten Ausführungsbeispiel gemäß Fig. 9 bis 11 umgreift der Anschlussflansch 30f des Crashelements 12f zumindest teilweise zwei zueinander rechtwinklig angeordnete Flächen eines Querträgers 34 der Tragstruktur 18 und bildet damit eine sehr große Abstütz- und Anbindungsfläche an die Tragstruktur 18 des Kraftfahrzeugs.

Im zweiten Ausführungsbeispiel gemäß Fig. 2 bis 5 weist die Abstützeinheit 16b zwei Stützelemente 14.1b, 14.2b auf, welche das wellenförmige Crashelement 12b zumindest teilweise umgeben. Dies bedeutet, dass das wellenförmige Crashelement 12b zwischen den beiden Stützelementen 14.1 b, 14.2b der Abstützeinheit 16b angeordnet ist. Im Endbereich 24 der Crashstruktur 10b sind die beiden Stützelemente 14.1b, 14.2b der Abstützeinheit 16b an das Crashelement 12b angebunden. Die Stützelemente 14.1b, 14.2b umfassen jeweils einen Befestigungsflansch 28.1 b, 28.2b, über welchen sie mit der Tragstruktur 18 des Kraftfahrzeugs bzw. mit einem Querträger 34 der Tragstruktur 18 des Kraftfahrzeugs verbunden sind. Wie aus Fig. 2 ersichtlich ist, umschließen die Stützelemente 14.1b, 14.2b der Abstützeinheit 16b das wellenförmige Crashelement 12b beidseitig formschlüssig, so dass die Crashstruktur 10b im Endbereich 24 nicht nur stabil ist, sondern auch bei nicht senkrecht auf die Crashstruktur 10b wirkenden Kräften und Momenten in seiner Lage sicher fixiert ist.

Im fünften Ausführungsbeispiel gemäß Fig. 8 ist die Crashstruktur 10e einteilig ausgeführt. Ferner ist das zumindest eine in Fahrzeugquerrichtung 26 verlaufende Stützelement 14e der Abstützeinheit 16e an das Crashelement 12e angeformt. Bevorzugt ist das Stützelement 14e an einer Stirnseite des Crashelements 12e und vorzugsweise rechtwinklig zum Crashelement 12e angeformt. In vorteilhafter Weise ist der Endbereich 24 des als wellenförmiges Bauteil ausgeführten Crashelements 12e abgeschrägt ausgeführt. Vorzugsweise ist die Abschrägung in einem Winkel von 45° ausgeführt. Bei der Crashstruktur 10e sind die Wellenberge im Endbereich 24 derart abgeschrägt und geöffnet ausgebildet, dass zwischen dem Stützelement 14e und den in Fahrzeuglängsrichtung 20 verlaufenden Wellen 22 im Crashelement 12e Durchbrüche ausgebildet sind.

Im vierten Ausführungsbeispiel gemäß Fig. 7 ist eine Kante 32 des wellenförmigen Bauteils 12d abgeschrägt. Vorzugsweise ist die Abschrägung in einem Winkel von 45° ausgeführt. An einer der abgeschrägten Kante 32 gegenüberliegenden Seite des Crashelements 12d ist das zumindest eine Stützelement 14d angeordnet, an welches der Befestigungsflansch 28d zur Anbindung an die Tragstruktur 18 des Kraftfahrzeugs angeformt ist. Der Befestigungsflansch 28d ist bündig zur Stirnseite des Crashelements 12d montiert, wobei die wellenförmige Hohlraumstruktur des Crashelements 12d an der Stirnseite des Crashelements 12d durch den Befestigungsflansch 28d flächig nach außen verschlossen wird. Die Überdeckung des wellenförmig ausgebildeten Befestigungsflanschs 28d bildet im Endbereich 24 mit dem Crashelement 12d eine formschlüssige Verbindung, die der Crashstruktur 10d in diesem Bereich zusätzliche Stabilität bietet.

In den Ausführungsbeispielen gemäß Fig. 2 bis 5 und Fig. 9 bis 11 umgreifen zwei Befestigungsflansche 28.1 b, 28.2b von zwei Stützelementen 14.1 b, 14.2b oder ein Befestigungsflansch 28f eines Stützelements 14f und ein Anschlussflansch 30f des Crashelements 12f einen Querträger 34 der Tragstruktur 18 des Kraftfahrzeugs mindestens teilweise. Während im zweiten Ausführungsbeispiel gemäß Fig. 2 bis 5 noch eine Montage von zwei Stützelementen 14.1 b, 14.2b vorgesehen ist, halbiert sich im sechsten Ausführungsbeispiel gemäß Fig. 9 bis 11 der Montageaufwand mit nur einem Stützelement 14f, da die Abstützung am Querträger 34 der Tragstruktur 18 auf der dem Stützelement 14f gegenüberliegenden Seite über einen bereits an das Crashelement 12f angeformten Anschlussflansch 30f erfolgt. Hierdurch entsteht sowohl eine großflächige formschlüssige Verbindung der Abstützeinheit 16b, 16f mit dem Crashelement 12b, 12f als auch eine großflächige formschlüssige Anbindung der Crashstruktur 10b, 10f mit dem Querträger 34 der Tragstruktur 18 des Kraftfahrzeugs. Diese Verbindung kann auf einfache und somit zuverlässige Weise zum Beispiel über eine Schraub-, Kleb- oder Nietverbindung beziehungsweise eine Kombination aus verschiedenen Verbindungstechniken erfolgen.

### BEZUGSZEICHENLISTE

- 10a, 10b, 10c, 10d, 10e, 10f: Crashstruktur
- 12a, 12b, 12c, 12d, 12e, 12f: Crashelement, (wellenförmiges Bauteil)
- 14a, 14.1b, 14.2b, 14c, 14d, 14e, 14f: Stützelement
- 16a, 16b, 16c, 16d, 16e, 16f: Abstützeinheit
- 18: Tragstruktur
- 20: Fahrzeuglängsrichtung
- 22: Wellen
- 24: Endbereich
- 26: Fahrzeugquerrichtung
- 28a, 28.1b, 28.2b, 28c, 28d, 28f: Befestigungsflansch (Stützelement)
- 30c, 30f: Anschlussflansch (Crashelement)
- 32: Kante (Crashelement)
- 34: Querträger

## Patentansprüche

1. Crashstruktur für ein Kraftfahrzeug mit einem Crashelement (12a, 12b, 12c, 12d, 12e, 12f), welches mindestens teilweise aus einem Faserverbundwerkstoff besteht, und einer zumindest ein Stützelement (14a, 14.1b, 14.2b, 14c, 14d, 14e, 14f) aufweisenden Abstützeinheit (16a, 16b, 16c, 16d, 16e, 16f), welche mit einer Tragstruktur (18) des Kraftfahrzeugs verbunden ist, wobei das Crashelement (12a, 12b, 12c, 12d, 12e, 12f) in Fahrzeuglängsrichtung (20) verlaufende Wellen (22) aufweist, und wobei sich ein Endbereich (24) des Crashelements (12a, 12b, 12c, 12d, 12e, 12f) mindestens über das zumindest eine in Fahrzeugquerrichtung (26) verlaufende Stützelement (14a, 14.1b, 14.2b, 14c, 14d, 14e, 14f) der Abstützeinheit (16a, 16b, 16c, 16d, 16e, 16f) an der Tragstruktur (18) des Kraftfahrzeugs abstützt, **dadurch gekennzeichnet, dass** das zumindest eine in Fahrzeugquerrichtung (26) verlaufende Stützelement (14a, 14.1b, 14.2b, 14c, 14d, 14e, 14f) der Abstützeinheit (16a, 16b, 16c, 16d, 16e, 16f) an die Wellengeometrie des Crashelements (12a, 12b, 12c, 12d, 12f) angepasst ist und flächig am Endbereich (24) des wellenförmigen Crashelements (12a, 12b, 12c, 12d, 12e, 12f) anliegt.

2. Crashstruktur nach Anspruch 1, **dadurch gekennzeichnet, dass** an die Wellengeometrie des zumindest einen Stützelements (14a, 14.1b, 14.2b, 14c, 14d, 14f) ein Befestigungsflansch (28a, 28.1 b, 28.2b, 28c, 28d, 28f) zur Anbindung an die Tragstruktur (18) des Kraftfahrzeugs angeformt ist.

3. Crashstruktur nach einem der Ansprüche 1 oder 2, **dadurch gekennzeichnet, dass** an das Crashelement (12b, 12e) ein Anschlussflansch (30c, 30f) zur Anbindung an die Tragstruktur (18) des Kraftfahrzeugs angeformt ist.

4. Crashstruktur nach einem der Ansprüche 1 bis 3, **dadurch gekennzeichnet, dass** die Abstützeinheit (16b) zwei Stützelemente (14.1b, 14.2b) aufweist, welche das Crashelement (12b) zumindest teilweise umgeben.

5. Crashstruktur nach einem der Ansprüche 1 bis 4, **dadurch gekennzeichnet, dass** der Endbereich (24) des wellenförmigen Bauteils (12e) abgeschrägt ausgeführt ist.

6. Crashstruktur nach einem der Ansprüche 1 bis 5, **dadurch gekennzeichnet, dass** das zumindest eine in Fahrzeugquerrichtung (26) verlaufende Stützelement (14e) der Abstützeinheit (16e) an das Crashelement (12e) angeformt ist.

7. Crashstruktur nach einem der Ansprüche 1 bis 6, **dadurch gekennzeichnet, dass** eine Kante (32) des wellenförmigen Bauteils (12d) abgeschrägt ist.

8. Crashstruktur nach einem der Ansprüche 1 bis 7, **dadurch gekennzeichnet, dass** an einer der abgeschrägten Kante (32) gegenüberliegenden Seite des Crashelements (12d) das zumindest eine Stützelement (14d) angeordnet ist, an welches der Befestigungsflansch (28d) zur Anbindung an die Tragstruktur (18) des Kraftfahrzeugs angeformt ist.

9. Crashstruktur nach einem der Ansprüche 1 bis 8, **dadurch gekennzeichnet, dass** ein Befestigungsflansch (28f) eines Stützelements (14f) und ein Anschlussflansch (30f) des Crashelements (12f) oder zwei Befestigungsflansche (28.1 b, 28.2b) von zwei Stützelementen (14.1b, 14.2b) einen Querträger (34) der Tragstruktur (18) des Kraftfahrzeugs mindestens teilweise umgreifen.

## Claims

1. Crash structure for a motor vehicle comprising a crash element (12a, 12b, 12c, 12d, 12e, 12f) which consists at least partly of a fibre composite material, and a support unit (16a, 16b, 16c, 16d, 16e, 16f) comprising at least one support element (14a, 14.1b, 14.2b, 14c, 14d, 14e, 14f), which support unit is connected to a support structure (18) of the motor vehicle, wherein the crash element (12a, 12b, 12c, 12d, 12e, 12f) comprises waves (22) running in longitudinal direction of the motor vehicle (20) and wherein an end section (24) of the crash element (12a, 12b, 12c, 12d, 12e, 12f) is supported at least by the at least one support element (14a, 14.1b, 14.2b, 14c, 14d, 14e, 14f) of the support unit (16a, 16b, 16c, 16d, 16e, 16f) running in transverse direction of the vehicle (26) on the support structure (18) of the motor vehicle, **characterised in that** the at least one support element (14a, 14.1b, 14.2b, 14c, 14d, 14e, 14f) of the support unit (16a, 16b, 16c, 16d, 16e, 16f) running in transverse direction of the motor vehicle (26) is adjusted to the wave geometry of the crash element (12a, 12b, 12c, 12d, 12e, 12f) and rests flat on the end region (24) of the crash element (12a, 12b, 12c, 12d, 12e, 12f).

2. Crash structure according to claim 1, **characterised in that** on the wave geometry of the at least one support element (14a, 14.1b, 14.2b, 14c, 14d, 14f) a securing flange (28a, 28.1b, 28.2b, 28c, 28d, 28f) is formed for attachment to the support structure (18) of the motor vehicle.

3. Crash structure according to either claim 1 or 2, **characterised in that** a connection flange (30c, 30f) is formed on the crash element (12b, 12e) for attachment to the support structure (18) of the motor vehicle.

4. Crash structure according to any one of claims 1 to 3, **characterised in that** the support unit (16b) comprises two support elements (14.1b, 14.2b) which at least partly surround the crash element (12b).

5. Crash structure according to any one of claims 1 to 4, **characterised in that** the end section (24) of the wave-like component (12e) is designed to be chamfered.

6. Crash structure according to any one of claims 1 to 5, **characterised in that** the at least one support element (14e) of the support unit (16e) extending in transverse direction of the vehicle (26) is formed on the crash element (12e).

7. Crash structure according to any one of claims 1 to 6, **characterised in that** an edge (32) of the wave-like component (12d) is chamfered.

8. Crash structure according to any one of claims 1 to 7, **characterised in that** on a side of the crash element (12d) opposite the oblique edge (32) the at least one support element (14d) is arranged on which the securing flange (28d) is formed for connecting to the support structure (18) of the motor vehicle.

9. Crash structure according to any one of claims 1 to 8, **characterised in that** a securing flange (28f) of a support element (14f) and a connecting flange (30f) of the crash element (12f) or two securing flanges (28.1b, 28.2b) of two support elements (14.1b, 14.2b) at least partly grip around a transverse support (34) of the support structure (18) of the motor vehicle.

## Revendications

1. Structure antichocs pour un véhicule automobile, comprenant un élément antichocs (12a, 12b, 12c, 12d, 12e, 12f), qui est constitué au moins en partie d'un matériau composite fibreux, et une unité de support (16a, 16b, 16c, 16d, 16e, 16f) présentant au moins un élément de support (14a, 14.1b, 14.2b, 14c, 14d, 14e, 14f), laquelle unité est reliée à une structure de suspension (18) du véhicule automobile, dans laquelle l'élément antichocs (12a, 12b, 12c, 12d, 12e, 12f) présente des cannelures (22) s'étendant dans la direction longitudinale (20) du véhicule et dans laquelle une zone d'extrémité (24) de l'élément antichocs (12a, 12b, 12c, 12d, 12e, 12f) s'appuie sur la structure de suspension (18) du véhicule automobile via le au moins un élément de support (14a, 14.1b, 14.2b, 14c, 14d, 14e, 14f) - s'étendant dans la direction transversale (26) du véhicule - de l'unité de support (16a, 16b, 16c, 16d, 16e, 16f), **caractérisée en ce que** le au moins un élément de support (14a, 14.1b, 14.2b, 14c, 14d, 14e, 14f) - s'étendant dans la direction transversale (26) du véhicule - de l'unité de support (16a, 16b, 16c, 16d, 16e, 16f) est adaptée à la géométrie cannelée de l'élément antichocs (12a, 12b, 12c, 12d, 12e, 12f) et s'applique à plat sur la zone d'extrémité (24) de l'élément antichocs de forme cannelée (12a, 12b, 12c, 12d, 12e, 12f).

2. Structure antichocs selon la revendication 1, **caractérisée en ce que** sur la géométrie cannelée du au moins un élément de support (14a, 14.1b, 14.2b, 14c, 14d, 14f) est formée une semelle de fixation (28a, 28.1b, 28.2b, 28c, 28d, 28f) pour se raccorder à la structure de suspension (18) du véhicule automobile.

3. Structure antichocs selon l'une quelconque des revendications 1 ou 2, **caractérisée en ce que** sur l'élément antichocs (12b, 12e) est formée une semelle de raccordement (30c, 30f) pour se raccorder à la structure de suspension (18) du véhicule automobile.

4. Structure antichocs selon l'une quelconque des revendications 1 à 3, **caractérisée en ce que** l'unité de support (16b) présente deux éléments de support (14.1b, 14.2b) qui entourent au moins en partie l'élément antichocs (12b).

5. Structure antichocs selon l'une quelconque des revendications 1 à 4, **caractérisée en ce que** la zone d'extrémité (24) du composant de forme cannelée (12e) se présente en biseau.

6. Structure antichocs selon l'une quelconque des revendications 1 à 5, **caractérisée en ce que** le au moins un élément de support (14e) - s'étendant dans la direction transversale (26) du véhicule - de l'unité de support (16e) est formé sur l'élément antichocs (12e).

7. Structure antichocs selon l'une quelconque des revendications 1 à 6, **caractérisée en ce qu'**une arête (32) du composant de forme cannelée (12d) est biseautée.

8. Structure antichocs selon l'une quelconque des revendications 1 à 7, **caractérisée en ce que** sur un côté de l'élément antichocs (12d) opposé à l'arête biseautée (32) est aménagé le au moins un élément de support (14d) sur lequel la semelle de fixation (28d) est formée pour se raccorder à la structure de suspension (18) du véhicule automobile.

9. Structure antichocs selon l'une quelconque des revendications 1 à 8, **caractérisée en ce qu'**une semelle de fixation (28f) d'un élément de support (14f) et une semelle de raccordement (30f) de l'élément antichocs (12f) ou deux semelles de fixation (28.1b, 28.2b) de deux éléments de support (14.1b, 14.2b) enveloppent au moins en partie une traverse (34) de la structure de suspension (18) du véhicule automobile.
